# EUROPÄISCHE PATENTSCHRIFT

(11) **EP 4 157 763 B1**
(45) Veröffentlichungstag und Bekanntmachung des Hinweises auf die Patenterteilung: **21.02.2024**
(21) Anmeldenummer: 21814721.3
(22) Anmeldetag: 11.11.2021
(51) Int. Cl.: B65G 45/16

(54) **FÖRDERGURT-ABSTREIFERSYSTEM MIT EINFACHER WARTUNG**
CONVEYOR BELT SCRAPER SYSTEM WITH SIMPLE MAINTENANCE
SYSTÈME RACLEUR DE BANDE TRANSPORTEUSE À MAINTENANCE SIMPLE

(30) Priorität: 27.11.2020 DE 102020131557; 27.11.2020 DE 102020131558
(43) Veröffentlichungstag der Anmeldung: 05.04.2023
(73) Patentinhaber: Kill-Frech, Cornelia, 48329 Havixbeck (DE)
(72) Erfinder: KIEL, Martin, 45659 Recklinghausen (DE); WEIMANN, Claus, 58300 Wetter (DE)
(74) Vertreter: Kalkoff & Partner Patentanwälte mbB
(86) Internationale Anmeldenummer: PCT/EP2021/081411
(87) Internationale Veröffentlichungsnummer: WO 2022/112016

(56) Entgegenhaltungen:
- DE-U1-202020 104 666
- KR-B1- 101 875 134
- US-B1- 6 439 373

## Beschreibung

Die Erfindung betrifft ein Abstreifersystem für einen Fördergurt, einen Gurtbandförderer hiermit sowie ein Verfahren zur Durchführung von Montage-, Prüfungs- oder Wartungsarbeiten an einem Abstreifersystem.

Für Fördergurte von Gurtbandförderern, die zur Förderung verschiedenster Fördergüter eingesetzt werden, ist die Verwendung von Abstreifersystemen bekannt. Bekannte Abstreifersysteme weisen zumeist einen quer zur Laufrichtung des Fördergurts ausgerichteten Systemträger auf, an dem sich eine Mehrzahl von Abstreifermodulen mit Abstreiferelementen befinden. Durch Anlage der Abstreiferelemente an den laufenden Fördergurt kann daran anhaftendes Fördergut abgestreift werden.

Es sind verschiedene Arten und Bauweisen von Abstreifersystemen und Abstreifermodulen bekannt. Bspw. zeigt die DE 10 2017 114 931 A1 ein Abstreifersystem zur Anordnung im Umlenkbereich einer Abwurftrommel eines schnell laufenden Gurtförderbands. An einem quer zur Laufrichtung des Gurtförderbands angeordneten und federnd gelagerten Systemträger sind Abstreifblöcke aus elastischem Material nebeneinander in austauschbarer Weise befestigt.

DE 20 2020 104 666 U1 offenbart einen Förderbandabstreifer, insbesondere einen Trommelabstreifer mit einer Anzahl von nebeneinander auf einer Traverse angeordneten Abstreifelementen. Jedes Abstreifelement weist einen elastischen Grundkörper und eine Halterung zur Befestigung des Abstreifelementes an der Traverse auf. Die Halterung weist zwei klemmend ineinandergreifende Klemmteile auf, von denen eines an einem auf der Traverse festlegbaren Halteelement und das andere an dem Grundkörper befestigt ist.

Die DE 10 2013 006 821 A1 beschreibt ein Gurtabstreifersystem aus Modulen für den Rücklaufbereich von Förderbändern. Ein Systemträger ist quer zur Laufrichtung des Fördergurts angeordnet. Auf dem Systemträger sind mehrere Abstreifmodule nebeneinander angebracht. Die Abstreifmodule tragen jeweils eine Abstreiflamelle, die schälend an dem Gurt anliegt.

Im Betrieb des Abstreifersystems unterliegen die Abstreiferelemente, bspw. Abstreiflamellen oder Abstreifblöcke, einem deutlichen Verschleiß und müssen regelmäßig gewechselt werden.

Die US 4, 098,394 beschreibt eine Montage- und Stützanordnung für Förderbandabstreifer. Auf einer Querwelle sind mehrere Reinigungsklingen an Armen befestigt. Außerhalb eines Gehäuses ist eine radiale Sperrklinkenanordnung zur Drehung der Querwelle vorgesehen, um die Klingen gegen das Förderband vorzuspannen. Wenn die Klingen repariert oder ersetzt werden sollen, wird die Querwelle entfernt, indem an einem Ende eine Kupplung und am gegenüberliegenden Ende eine Hülse entfernt wird. Ein Montageflansch wird von einer Seitenwand abgebaut und die Querwelle wird mit der Abstreifer-Baugruppe durch eine Zugangstür aus dem Gehäuse entfernt.

Die KR 101 875 134 B1 offenbart einen Bandreiniger mit einer Abstreifereinheit, einer Stützeinheit, einer Einheit zur Bereitstellung einer elastischen Rückstellkraft, einer Aufnahmeeinheit, einer Steuereinheit und einer Befestigungseinheit. Die Abstreifereinheit ist an der Unterseite eines Rückführbandes des Bandförderers angebracht und streift Fremdkörper ab, die an der Unterseite des Rückführbandes haften. Die Einheit, die die elastische Rückstellkraft bereitstellt, hat ein elastisches Element, das eine elastische Rückstellkraft bereitstellt, um die Stützeinheit nach oben zu bewegen, so dass die Abstreifereinheit kontinuierlich an der unteren Oberfläche des Rückführbandes befestigt ist.

Bei bekannten Abstreifersystemen kann der für Wartungsarbeiten notwendige Zugang zu Abstreifermodulen schwierig sein, insbesondere wenn gefährliche Bereiche unterhalb des Fördergurts betreten werden müssen. Es kann daher als Aufgabe angesehen werden, ein Abstreifersystem, einen Gurtbandförderer hiermit sowie ein Verfahren zur Durchführung von Montage-, Prüfungs- oder Wartungsarbeiten an einem Abstreifersystem vorzuschlagen, bei dem ein Zugang zu Abstreifermodulen auf einfache Weise und unter Vermeidung von Risiken für das Wartungspersonal ermöglicht ist.

Die Aufgabe wird gelöst durch ein Abstreifersystem für einen Fördergurt gemäß Anspruch 1, einen Gurtbandförderer gemäß Anspruch 12 und ein Verfahren gemäß Anspruch 13. Abhängige Ansprüche beziehen sich auf vorteilhafte Ausführungsformen der Erfindung.

Die Erfinder sind von der Überlegung ausgegangen, dass Arbeiten am Abstreifersystem, insbesondere Montage-, Prüfungs- oder Wartungsarbeiten, die die Abstreifmodule betreffen, dann besonders aufwendig sind, wenn gefährliche Anlagenbereiche betreten werden müssen und deshalb Sicherungsmaßnahmen, wie bspw. der Einbau von Gerüsten o. ä. sowie längere Betriebsunterbrechungen erforderlich sind. Von besonderem Interesse wäre daher die Möglichkeit, Wartungsarbeiten an Abstreifermodulen außerhalb des Gurtbereichs durchzuführen. Um dies zu erreichen, schlagen die Erfinder ein Abstreifersystem vor, bei dem der Systemträger mit den Abstreifermodulen (oder zumindest mit einem Abstreifermodul) auf möglichst einfache Weise zur Seite hin entnommen werden kann.

Das erfindungsgemäße Abstreifersystem umfasst einen Systemträger und mindestens ein daran angebrachtes Abstreifermodul, bevorzugt mehrere am Systemträger angebrachte Abstreifermodule, jeweils mit einem Abstreiferelement zur Anlage an dem Fördergurt. Der Systemträger ist zur Anordnung quer zum Fördergurt vorgesehen. Er ist bevorzugt als um eine Längsachse drehbare bzw. in Drehrichtung spannbare Welle ausgebildet. Der Systemträger kann zwar im Prinzip eine beliebige Querschnittsform aufweisen, ist aber bevorzugt mindestens abschnittsweise von rundem Querschnitt, besonders bevorzugt mindestens im Bereich der gegenüberliegenden beiden Endbereiche. In einer bevorzugten, besonders einfach gestalteten Ausführungsform ist der Systemträger als durchgehendes Rohr ausgebildet, bevorzugt mit durchgehend gleichbleibend rundem Querschnitt.

Das Abstreifermodul bzw. die Abstreifermodule sind bevorzugt lösbar am Systemträger angebracht, besonders bevorzugt in einer Klemmhalterung am Systemträger lösbar befestigt. Bei dem jeweiligen Abstreiferelement kann es sich bspw. um einen Abstreifblock aus einem flexiblen Material handeln, insbesondere wenn der Abstreifer als Vorabstreifer, d. h. im Bereich einer Umlenkung des Fördergurts angeordnet ist. Bevorzugt verfügt das Abstreiferelement über eine Abstreifkante, besonders bevorzugt aus Metall, bspw. Hartmetall. Dieses kann weiter bevorzugt schälend am Fördergurt anliegen, insbesondere im Rücklaufbereich.

Für den Systemträger ist eine Halterung zur Anbringung am Gurtbandförderer vorgesehen. Erfindungsgemäß umfasst die Halterung zumindest ein Anbringungsteil zur ortsfesten Anbringung relativ zu einem Bandgerüst des Fördergurts, ein Halteelement zur Anbringung des Systemträgers am Anbringungsteil und ein Stützelement am Anbringungsteil. Bevorzugt ist in einer Betriebsanordnung, d.h. einer Anordnung, in der das Abstreifersystem seine Funktion im Betrieb des Fördergurts erfüllt, die Halterung mit Anbringungsteil, Halteelement und Stützelement im Bereich eines Endes des Systemträgers vorgesehen, weiter bevorzugt seitlich außerhalb der Breite des Fördergurts. Auf der gegenüberliegenden Seite kann eine Gegenhalterung vorgesehen sein, die bevorzugt einfacher aufgebaut sein kann, wie nachfolgend noch näher erläutert wird.

Das Anbringungsteil kann Teil des Bandgerüsts oder mit diesem bevorzugt fest verbunden sein. In einer bevorzugten Ausführungsform kann das Anbringungsteil plattenförmig sein oder zumindest einen plattenförmigen Abschnitt zur Anbringung des Haltelements aufweisen.

Das Halteelement ist erfindungsgemäß mit dem Systemträger über eine Spannanordnung gekoppelt, mittels der der Systemträger mit einem Drehmoment um seine Längsachse beaufschlagbar ist. Durch das Drehmoment kann bevorzugt ein Andruck der Abstreiferelemente an den Fördergurt erzielt werden. Die Spannanordnung wirkt bevorzugt zwischen dem Halteelement und dem Systemträger, bspw. über ein drehfest am Systemträger angebrachtes Element, bspw. einen Spannarm. Die Spannanordnung kann bspw. ein Spannelement wie eine Sperrklinke, Spannschraube und/oder ein Federelement aufweisen, das zum Aufbringen des Drehmoments zwischen Halteelement und Systemträger wirkt.

Das Halteelement ist erfindungsgemäß lösbar mit dem Anbringungsteil verbindbar. In der Betriebsanordnung ist das Halteelement mit dem Anbringungsteil verbunden und der Systemträger über das Halteelement an dem Anbringungsteil gehalten. Durch Lösen des Halteelements vom Anbringungsteil kann das Abstreifersystem von der Betriebsanordnung in eine Montageanordnung überführt werden, in der der Systemträger mit dem Abstreifermodul und dem Halteelement in seiner Längsrichtung in eine Auszugsstellung ausziehbar ist. Beim Ausziehen des Systemträgers in seiner Längsrichtung kann das Abstreifermodul das Anbringungsteil (sowie bevorzugt das Stützelement) passieren. Hierfür ist bevorzugt ein freier Bereich von ausreichender Größe und passender Form vorgesehen, so dass bei Bewegung des Systemträgers alleine in Längsrichtung, d.h. bevorzugt ohne Bewegung in Querrichtung, auch das Abstreifermodul bzw. die Abstreifermodule sowie das Halteelement das Anbringungsteil und bevorzugt das Stützelement passieren können. Der freie Bereich kann mindestens zum Teil gebildet sein durch einen Ausschnitt am Stützelement. Bei dem oder vor dem Ausziehen kann, ausgehend von der Betriebsanordnung, in der das Abstreiferelement am Fördergurt anliegt, u.U. eine gewisse Drehung des Systemträgers mitsamt des darauf angebrachten Abstreifermoduls erfolgen, damit vorstehende Teile den freien Bereich passieren können.

Erfindungsgemäß ist dabei vorgesehen, dass in der Auszugsstellung (und bevorzugt durchgängig während des Vorgangs des Ausziehens des Systemträgers) das Stützelement den Systemträger stützt. Das Stützelement kann bevorzugt fest oder lösbar am Anbringungsteil vorgesehen sein; es ist auch möglich, dass das Stützelement einstückig mit dem Anbringungsteil ausgebildet ist. Besonders bevorzugt kann das Stützelement hakenförmig ausgebildet sein und den Systemträger zumindest teilweise umgreifen. Während das Stützelement bevorzugt in der Betriebsanordnung keinen Kontakt zum Systemträger hat, kann es die Abstützung des Systemträgers unmittelbar nach dem Lösen der Verbindung zwischen Halteelement und Anbringungsteil übernehmen. Somit muss das Gewicht des Systemträgers und der Abstreifermodule nicht anderweitig durch manuelles Halten oder Abstützung auf einem extra anzubringenden Gerüst o.Ä. aufgefangen werden.

Unter dem Ausziehen des Systemträgers in dessen Längsrichtung ist bevorzugt eine lineare, translatorische Bewegung zu verstehen. Das Abstreifermodul passiert bei der Überführung in die Auszugsstellung das Anbringungsteil, d. h. es befindet sich in der Betriebsanordnung auf einer ersten, inneren Seite des Anbringungsteils und in der Auszugsstellung auf der gegenüberliegenden, äußeren Seite davon.

Das erfindungsgemäße Abstreifersystem ermöglicht somit ein seitliches Ausziehen des Systemträgers in die Auszugsstellung, in der das Abstreifermodul sich außerhalb des Anbringungsteils befindet und für Zwecke von Montage, Prüfung oder Wartung gut zugänglich ist. Das Stützelement bewirkt eine Unterstützung des Systemträgers, so dass dieser nicht vom Bediener gehalten werden muss und ein Risiko des Herunterfallens verringert oder eliminiert wird. Unter der stützenden Wirkung des Stützelements wird eine Kraftwirkung vertikal nach oben verstanden, d. h. der Systemträger kann bevorzugt auf dem Stützelement aufliegen.

Dabei ist es bevorzugt, dass das Stützelement den Systemträger erst nach Lösen des Halteelements vom Anbringungsteil stützt, d. h. in der Betriebsanordnung kein direkter Kontakt zwischen dem Stützelement und dem Systemträger besteht, sondern ein geringer Abstand verbleibt von bspw. mindestens 0,5 mm oder 1 mm, bevorzugt weniger als 5 cm, besonders bevorzugt weniger als 1 cm. Nach Lösen des Halteelements vom Anbringungsteil kann bevorzugt die mit dem Halteelement verbundene Seite des Systemträgers um diesen geringen Betrag abgesenkt werden, bis sie mit dem Stützelement in Kontakt kommt. Bevorzugt ist die Anordnung so, dass sich, solange der Systemträger in einer gegenüberliegenden Gegenhalterung verbleibt, nur ein geringes Verkanten des Systemträgers von bspw. weniger als 5°, besonders bevorzugt weniger als 1°, ergibt.

Somit ist am erfindungsgemäßen Abstreifersystem eine einfache Wartung und insbesondere ein einfacher Austausch von Abstreifermodulen bzw. Abstreiferelementen möglich, ohne dass zwingend der Bereich unterhalb des Fördergurts betreten werden muss. Durch die Stützung des Systemträgers beim Ausziehen bzw. in der ausgezogenen Position ist die Handhabung besonders vereinfacht und kann bevorzugt durch eine einzelne Person durchgeführt werden.

Für die Anbringung des Halteelements am Anbringungsteil können verschiedene Verbindungsarten verwendet werden, wobei eine möglichst einfache Lösbarkeit bevorzugt ist, aber im Betrieb eine hinreichende Stabilität benötigt wird. Beispielsweise kann eine Schraubverbindung mit einer oder mehreren Schrauben vorgesehen sein. Gemäß einer Weiterbildung der Erfindung ist das Halteelement am Anbringungsteil mittels einer Schraubverbindung in Kombination mit mindestens einer Steckverbindung verbunden, bevorzugt zwei Steckverbindungen, die im Abstand zueinander angeordnet sind. Die Steckverbindung bzw. die Steckverbindungen sind bevorzugt so gestaltet, dass sie in Richtung der Längsachse des Systemträgers ausgerichtet sind, so dass das Halteelement nach dem Lösen der Schraubverbindung in Längsrichtung des Systemträgers vom Anbringungsteil abziehbar ist. Als Steckverbindung wird bevorzugt ein Bolzen verwendet, der in einer Aufnahmeöffnung aufgenommen wird. Dabei ist besonders bevorzugt der Bolzen am Anbringungsteil und die Aufnahmeöffnung am Halteelement angeordnet, wobei allerdings auch die umgekehrte Anordnung möglich ist. Die Schraubverbindung sowie die Steckverbindung(en) sind bevorzugt parallel zueinander ausgerichtet. Besonders bevorzugt ist nur eine Schraube vorgesehen, die zwischen zwei Steckverbindungen angeordnet ist. So kann eine für den Betrieb hinreichend feste Verbindung genutzt werden, die sehr schnell und einfach lösbar ist.

Gemäß einer Weiterbildung ist vorgesehen, dass das Stützelement den Systemträger teilweise umgreift. Dazu kann die innere, dem Systemträger zugewandte Form des Stützelements mindestens abschnittsweise der Kontur des Systemträgers entsprechen. Bspw. kann bei runder Kontur des Systemträgers die innere Form des Stützelements teilkreisförmig sein. Bevorzugt kann das Stützelement eine Vertiefung aufweisen, in der der Systemträger zum Teil aufgenommen und so gestützt und gegen Bewegungen in Querrichtung, insbesondere gegen Herausfallen gesichert wird. Weiter bevorzugt umgreift das Stützelement den Systemträger über einen ersten Teil von dessen Umfang, während es einen zweiten Teil des Umfangs des Systemträgers freilässt, so dass beim Ausziehen des Systemträgers das Abstreifermodul das Stützelement passieren kann. Der erste Umfangsteil, über den der Systemträger vom Stützelement umgriffen wird, kann bspw. mindestens 90° und bis zu 180° betragen, bevorzugt ist eine Umgreifung über einen Umfangsbereich >115° und <155°. So wird eine gute Unterstützung gewährleistet, so dass ein Risiko des Herausfallens des Systemträgers minimiert ist. Andererseits ist eine zu weite und insbesondere vollständige Umgreifung nicht bevorzugt, so dass der Systemträger mit dem Abstreifermodul noch entnommen werden kann. Bevorzugt ist die Form des Stützelements zumindest über den ersten Umfangsteil der Außenkontur des Systemträgers angepasst, besonders bevorzugt hat der Systemträger zumindest abschnittsweise einen runden Querschnitt und das Stützelement ist teilringförmig.

In einer bevorzugten Ausführungsform ist das Anbringungsteil vertikal oberhalb des Systemträgers angeordnet und das Stützelement erstreckt sich vertikal nach unten in Richtung des Systemträgers, so dass es diesen zumindest teilweise umgreift. Bevorzugt umgreift zumindest ein Abschnitt des Stützelementes den Systemträger so weit, dass dieser zwischen dem Anbringungsteil und dem umgreifenden Abschnitt des Stützelements angeordnet ist, d.h. der umgreifende Abschnitt des Stützelements erstreckt sich bevorzugt bis unter den Systemträger.

Bevorzugt ist zwischen dem Halteelement und dem Systemträger eine Drehlagerung vorgesehen, die eine zumindest geringfügige Drehung relativ zueinander erlaubt, um so bevorzugt die Anordnung und insbesondere die Vorspannung zwischen dem Abstreiferelement und dem Fördergurt zu verändern. Die Drehlagerung kann verschieden gebildet sein, bevorzugt als Lagerbuchse, besonders bevorzugt als Kunststoff-Buchse.

In einer bevorzugten Ausführungsform ist das Halteelement mindestens zum Teil plattenförmig ausgebildet und der Systemträger durchdringt das Halteelement, bevorzugt senkrecht dazu. Eine solche Anordnung ist besonders einfach im Aufbau und ermöglicht eine stabile Befestigung, insbesondere wenn auch das Anbringungsteil und/oder das Stützelement plattenförmig ausgebildet und aufeinander angeordnet sind.

Wie bereits erwähnt ist zur Halterung bevorzugt eine Gegenhalterung vorgesehen, so dass der Systemträger in der Halterung und der Gegenhalterung gelagert ist. Wie das (erste) Anbringungsteil der Halterung ist bevorzugt für die Gegenhalterung ein zweites Anbringungsteil vorgesehen, das in einem Abstand in Längsrichtung des Systemträgers vom ersten Anbringungsteil angeordnet ist. Der Systemträger ist bevorzugt am zweiten Anbringungsteil drehbar und in seiner Längsrichtung verschiebbar gelagert. Hierzu kann auch am zweiten Anbringungsteil bzw. an einem damit verbundenen Element bevorzugt eine Lagerhülse für den Systemträger vorgesehen sein, besonders bevorzugt als Lagerbuchse, z. B. aus Kunststoff. Die Gegenlagerung ist bevorzugt in Längsrichtung des Systemträgers nicht arretiert, so dass der Systemträger nach Lösen der Halterung ohne weitere Maßnahmen aus der Gegenhalterung ausgezogen werden kann. So ist ein Ausbau mit Zugang nur von der Seite der Halterung her möglich, ohne dass ein Zugang zur Gegenhalterung erforderlich ist.

Gemäß einer bevorzugten Ausführungsform kann für den Systemträger eine Ausziehhilfe vorgesehen sein, die so an den Systemträger anbringbar ist, dass sie sich in dessen Verlängerung in der Längsrichtung des Systemträgers erstreckt. Eine solche Ausziehhilfe kann dazu dienen, den Systemträger beim Ausziehen zu greifen und zu führen bzw. zu halten. Bevorzugt weist die Ausziehhilfe und/oder Systemträger am Ende eine Einsatzöffnung auf, so dass die Ausziehhilfe und der Systemträger ineinander steckbar sind. Es kann auch ein zwischengesetztes Stück, d. h. ein Adapter zur Kopplung der Ausziehhilfe und des Systemträgers verwendet werden. Ein solcher Adapter kann bspw. eine Klemmvorrichtung zur Verklemmung mit dem Systemträger aufweisen und einen Eingriffsabschnitt zur Ankopplung der Ausziehhilfe. Weiter bevorzugt kann eine Verriegelung zur Festlegung der Ausziehhilfe am Systemträger und/oder am Adapter vorgesehen sein, so dass ein unbeabsichtigtes Abziehen vermieden werden kann.

Wie bereits erläutert können verschiedene Arten von Abstreifermodulen am Systemträger angebracht sein. Gemäß einer bevorzugten Ausführung weist das Abstreifermodul (bzw. bevorzugt alle Abstreifermodule) einen Modularm auf, an dem das Abstreiferelement angebracht ist. Der Modularm ist in einem Modulgelenk schwenkbar, bevorzugt um eine Achse, die mindestens im Wesentlichen parallel zur Längsrichtung des Systemträgers ausgerichtet ist. Hierunter ist zu verstehen, dass die Ausrichtung auch eine leichte Schrägstellung bzw. leichte Drehung umfassen kann, bevorzugt mit Winkeln <30°, weiter bevorzugt <20°, besonders bevorzugt <10°.

Bevorzugt weist das Abstreifermodul ein Federelement auf, um den Modularm mit einem Drehmoment zu beaufschlagen. Es kommen verschieden Typen von Federelementen in Frage, bevorzugt ist eine Gummitorsionsfeder. Durch das Federelement kann ein Andrücken des Abstreiferelements gegen den Fördergurt bewirkt werden. Weiter bevorzugt kann das Abstreifermodul einen Anschlag für die Drehung des Modularms im Modulgelenk aufweisen, um die Schwenkbewegung des Abstreiferelements in Richtung auf den Fördergurt zu begrenzen. Im Fall der Verwendung eines Federelements ist der Anschlag bevorzugt so angeordnet, dass die Feder den Modularm in Richtung auf den Anschlag beaufschlagt, wobei am Anschlag noch Vorspannung gegeben ist.

Mit dem erfindungsgemäßen Abstreifersystem kann ein Gurtbandförderer so ausgerüstet werden, dass das Abstreiferelement am Fördergurt anliegt und das Anbringungsteil am Bandgerüst befestigt ist.

An dem erfindungsgemäßen Abstreifersystem können Arbeiten, bspw. Montage-, Prüfungs- oder Wartungsarbeiten in besonders einfacher Weise ausgeführt werden, indem ausgehend von der Betriebsanordnung das Halteelement vom Anbringungsteil gelöst wird, der Systemträger mit dem Abstreifermodul und dem Halteelement in Längsrichtung des Systemträgers ausgezogen wird, wobei das Stützelement während des Ausziehens des Systemträgers diesen stützt.

Nachfolgend werden Ausführungsformen der Erfindung anhand von Zeichnungen näher beschrieben. Dabei zeigen:
- Fig. 1, 2: perspektivische Ansichten eines Teils eines Gurtbandförderers mit einem Fördergurt und einem Abstreifer gemäß einer ersten Ausführungsform;
- Fig. 1a: eine vergrößerte perspektivische Ansicht einer Halterung aus Fig. 1;
- Fig. 3: eine Seitenansicht des Abstreifers aus Fig. 1, 2;
- Fig. 4, 5: ein Abstreifermodul des Abstreifers aus Fig. 1-3 in Draufsicht sowie in teilweise geschnittener Seitenansicht;
- Fig. 6: einen Querschnitt durch das Abstreifermodul aus Fig. 5 entlang der Linie A..A;
- Fig. 7: eine perspektivische Ansicht des Abstreifermoduls aus Fig. 4, 5 mit gelöstem Abstreiferelement;
- Fig. 8a-8e: perspektivische Ansichten verschiedener Stellungen von Teilen des Abstreifers gemäß der ersten Ausführungsform bei der Entnahme des Systemträgers; und
- Fig. 9a-9c: perspektivische Ansichten des Abstreifers gemäß der ersten Ausführungsform bei der Verwendung einer Ausziehhilfe
- Fig.10: eine Querschnittsansicht entlang der Line B..B aus Fig. 8b;
- Fig. 11: eine perspektivische Ansicht eines Teils eines Gurtbandförderers mit einem Fördergurt und einem Abstreifer gemäß einer zweiten Ausführungsform;
- Fig. 12: eine Draufsicht auf einen Systemträger des Abstreifers aus Fig. 11;
- Fig. 13: eine Seitenansicht des Abstreifers aus Fig. 11, 12;
- Fig. 14: eine Ansicht analog zu Fig. 10 für den Abstreifer aus Fig. 11 - 13 gemäß der zweiten Ausführungsform.

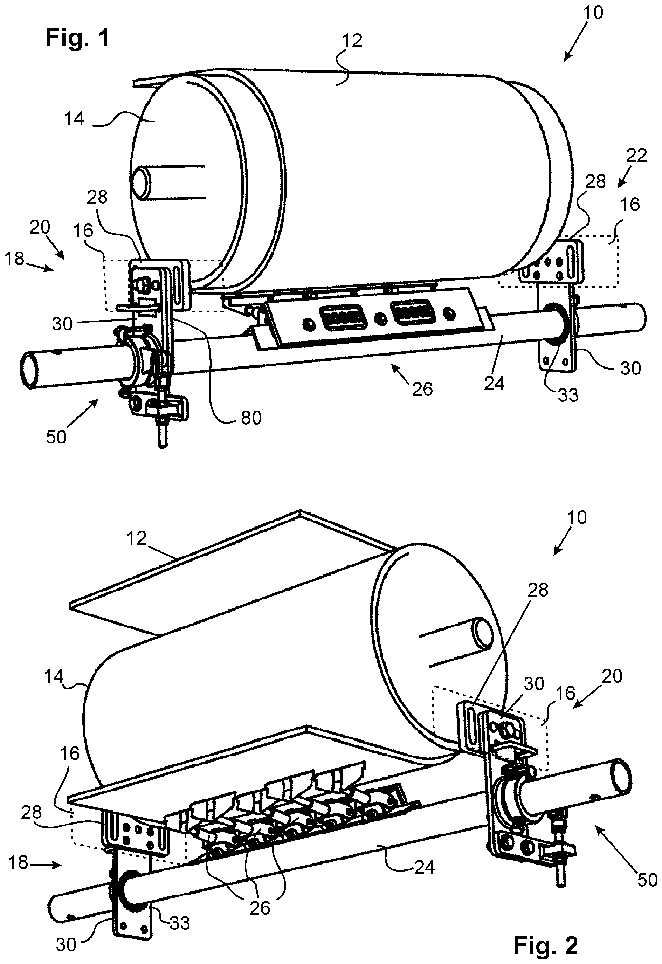

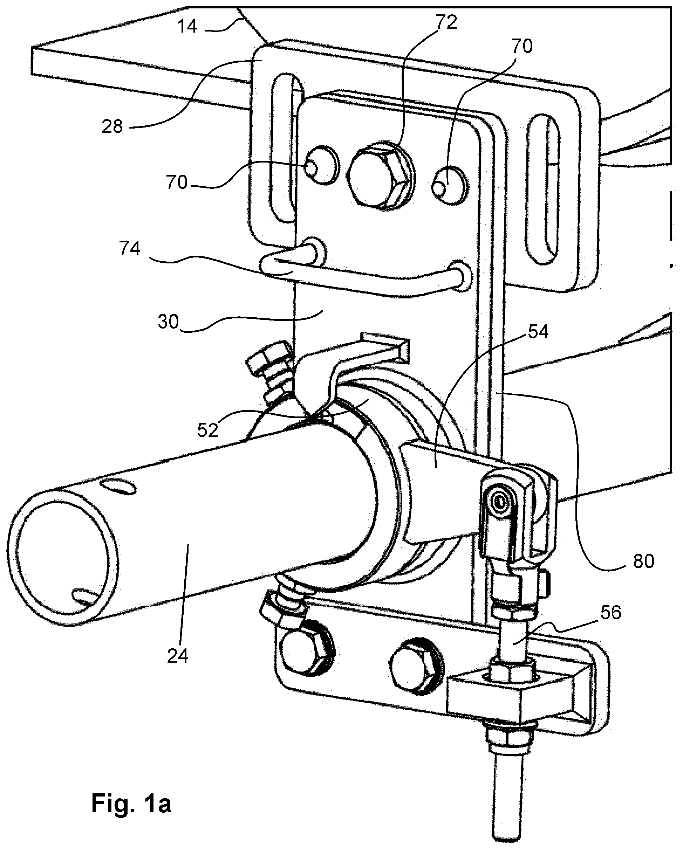

Fig. 1, Fig. 2 zeigen für eine erste Ausführungsform in perspektivischen Ansichten einen Teil eines Gurtbandförderers 10 mit einem Fördergurt 12, der an einer Umlenktrommel 14 umgelenkt ist. Eine Welle der Umlenktrommel ist gelagert an einem Bandgerüst 16, von dem hier nur Teile schematisch dargestellt sind

Am Gurtbandförderer 10 ist ein Abstreifer 18 mit einer Mehrzahl von Abstreifermodulen 26 vorgesehen mit einem Systemträger 24 und einer Halterung 20 und Gegenhalterung 22 zur Anbringung am Bandgerüst 16.

Die Halterung 20 und die Gegenhalterung 22 verfügen jeweils über ein Anbringungsteil, das am Bandgerüst 16 befestigt oder Teil des Bandgerüstes 16 ist, hier jeweils in Form von Anbringungsplatten 28. An den Anbringungsplatten 28 ist jeweils ein Halteelement in Form einer Halteplatte 30 angebracht.

Der Systemträger 24 ist in der gezeigten Ausführungsform ein Rohr von durchgehend rundem Querschnitt. Die Halteplatten 30 weisen jeweils runde Aussparungen mit darin eingesetzten Kunststoff-Gleitbuchsen 33 auf, in denen der Systemträger 24 drehbar gelagert ist.

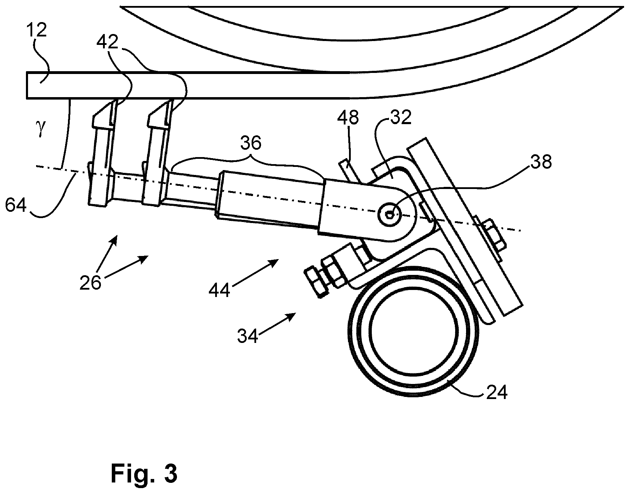

In Fig. 3 sind in einer Seitenansicht zwei Abstreifermodule 26 dargestellt. Die Abstreifermodule 26 umfassen jeweils ein Basiselement 32, das am Systemträger 24 in einer Klemmhalterung 34 lösbar angebracht ist. Am Basiselement 32 ist ein Abstreiferarm 36 um eine Schwenkachse 38 schwenkbar angebracht. Am Ende des Abstreiferarms 36 ist jeweils ein Abstreifelementhalter 40 mit einem Abstreifelement 42 angeordnet.

Wie bspw. aus Fig. 2 ersichtlich ist, sind mehrere Abstreifermodule 26 nebeneinander am Systemträger 24 angeordnet. Der Systemträger 24 erstreckt sich in Richtung der Breite des Fördergurts 12, also quer zu dessen Laufrichtung. Bei der ersten Ausführungsform weisen nebeneinander angeordnete Abstreifermodule 26 jeweils im Wechsel kürzere und längere Abstreiferarme 36 auf, so dass die Abstreiferelemente 42 in zwei gestaffelten Reihen angeordnet sind, wobei in Laufrichtung des Fördergurts gesehen stets eine geringfügige Überlappung zwischen den Abstreiferelementen 42 der beiden Reihen gegeben ist. Die Abstreifermodule 26 sind so nebeneinander positioniert, dass sich die Reihen über zumindest im Wesentlichen die gesamte Breite des Fördergurts 12 erstrecken.

Im Betrieb des Gurtbandförderers 10 und des Abstreifers 18 liegen Abstreifkanten der Abstreiferelemente 42 wie in Fig. 3 gezeigt schälend auf der Oberfläche des Fördergurts 12 an, im gezeigten Beispiel im Rücklaufbereich des Förderbandes 12. Dabei werden die Abstreiferelemente 42 federnd gegen die Oberfläche des Fördergurts 12 angedrückt. Verschmutzungen und anhaftendes Fördergut werden so durch die Abstreiferelemente 42 vom laufenden Fördergurt 12 abgestreift.

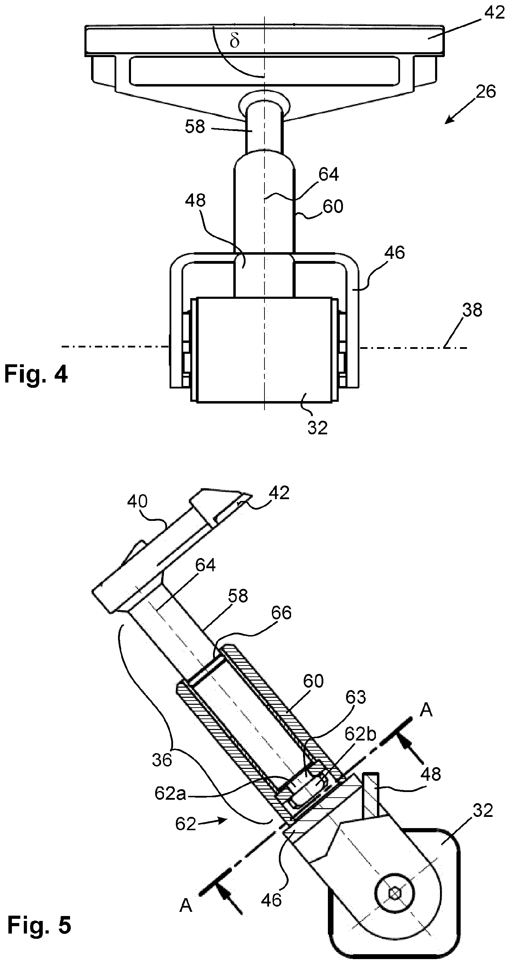

In Fig. 4, 5 ist eines der Abstreifermodule 26 näher dargestellt. Wie dort gezeigt ist zwischen dem Basiselement 32 und dem Abstreiferarm 36 ein Gelenk 44 vorgesehen, so dass der Abstreiferarm 36 um eine Schwenkachse 38 schwenkbar ist. Wie dargestellt umfasst das Gelenk 44 einen das Basiselement 32 umgreifenden Bügel 46.

Im Inneren des Gelenks 44 wirkt eine Gummitorsionsfeder (nicht dargestellt), die den Abstreiferarm 36 mit einem Drehmoment beaufschlagt.

Am Basiselement 32 ist eine hervorstehende Lasche als Anschlag 48 vorgesehen. In einer Anschlagposition liegt ein Teil des Bügels 46 am Anschlag 48 an, so dass der Abstreiferarm 36 nicht weiter um die Schwenkachse 38 verschwenken kann. Die Gummitorsionsfeder ist so ausgebildet, dass sie den Abstreiferarm 36 in Richtung des Anschlags beaufschlagt, wobei in der in Fig. 5 dargestellten Anschlagposition eine Vorspannung 48 der Feder herrscht.

Durch die Wirkung der j eweiligen Federn der Abstreifermodule 26 werden die Abstreiferelemente 42 gegen die Oberfläche des Fördergurts 12 gedrückt, können aber durch Verschwenken in den Gelenken 44 beim Einwirken entsprechender Kräfte im Betrieb, bspw. durch stationäre Gurtschäden, Erhebungen o. ä. auf der Oberfläche des Fördergurts 12 durch eine entsprechende Schwenkbewegung des Abstreiferarms 36 um die Schwenkachse 38 gegen die Wirkung der Feder ausweichen.

Eine Vorspannung des gesamten Abstreifers 18, mit der die Gesamtheit der Abstreiferelemente 42 gegen den Fördergurt 12 gedrückt wird, wird durch Vorgabe einer Drehposition des Systemträgers 24 vorgegeben. An der Halterung 20 ist hierfür zwischen der Halteplatte 30 und dem Systemträger 24 eine Spannvorrichtung 50 vorgesehen.

Fig. 1a zeigt die Halterung 20 in einer vergrößerten Darstellung. Ein am Systemträger 24 angebrachter Klemmring weist einen radial vom Systemträger 24 hervorstehenden Spannarm 54 auf, der mittels einer Spannschraube 56 gegenüber einer fest an der Halteplatte 30 angebrachten Anbringung gespannt werden kann. Durch Verstellung der Spannschraube 56 kann so der Systemträger 24 gedreht und eine Vorspannung der Federn der Abstreifermodule 26 eingestellt werden.

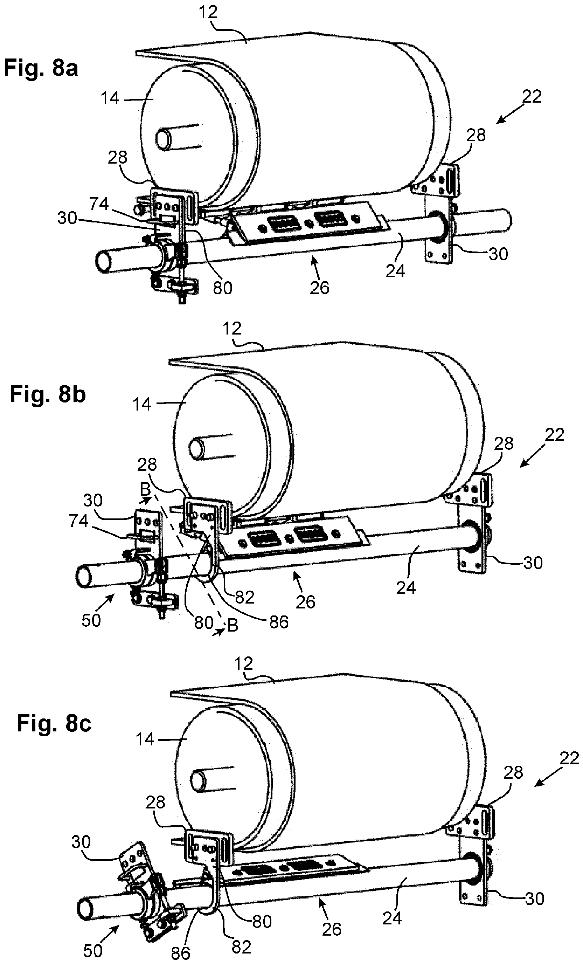

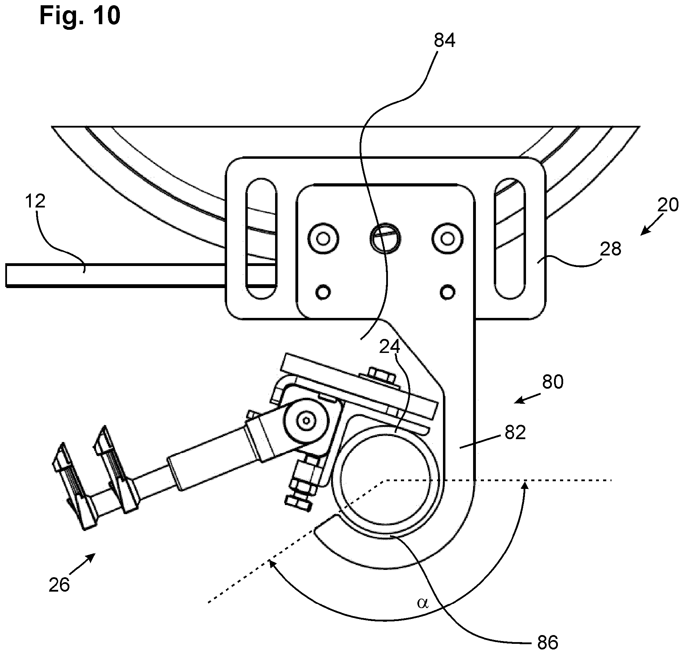

Wie in Fig. 1, 1a weiter gezeigt ist an der Anbringungsplatte 28 der Halterung 20 zudem ein plattenförmiges Stützelement 80 angebracht, das in der gezeigten Ausführung zwischen der Anbringungsplatte 28 und der Halteplatte 30 angeordnet ist. Form und Funktion des Stützelements 80 werden später im Hinblick auf Fig. 8a-8d und Fig. 10 näher erläutert.

Im Betrieb des Abstreifers 18 kommt es zu einem fortwährenden Verschleiß an den Abstreiferelementen 42, so dass eine regelmäßige Inspektion und Wartung erforderlich ist. Der Abstreifer 18 ist hinsichtlich seiner Anbringung am Bandgerüst 16 sowie hinsichtlich der Anbringung der Abstreiferelemente 42 an den Abstreifermodulen 26 für eine besonders einfache Wartung ausgelegt.

Wie insbesondere aus Fig. 4, Fig. 5, Fig. 7 deutlich wird, umfasst der Abstreiferarm 36 zwei Elemente, die lösbar aneinander befestigt sind, nämlich einen am Abstreiferelementhalter 40 angebrachten Schaft 58 und eine mit dem Basiselement 32 verbundene, nämlich am Bügel 46 des Gelenks 44 befestigte Hülse 60. Der Schaft 58 ist in die Hülse 60 eingesteckt (Fig. 5) und mittels einer Drehverriegelung 62 in Richtung einer Längsachse 64 des Abstreiferarms 36 gesichert.

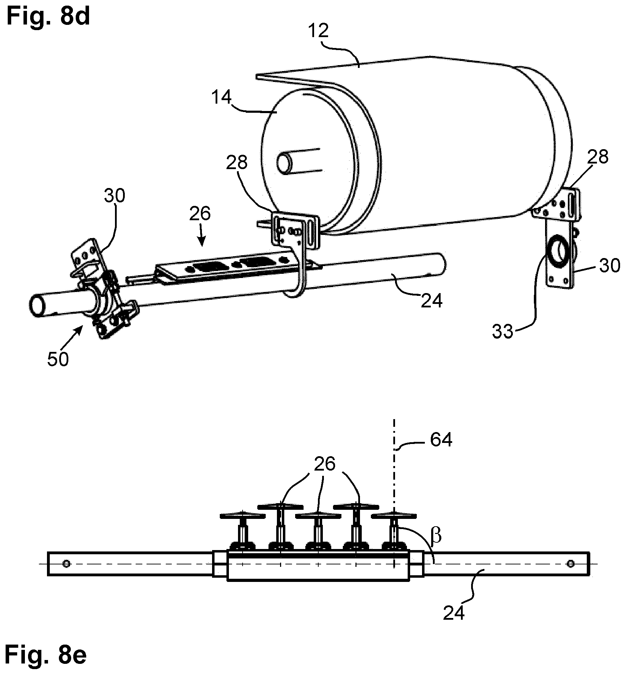

Die Längsachse 64 erstreckt sich in der gezeigten Ausführung wie aus Fig. 2, Fig. 3 ersichtlich ist in einer vertikalen Ansicht parallel zur Laufrichtung des Fördergurts 12 und somit auch rechtwinklig, d.h. unter einem Winkel β von 90° (s. Fig. 8e) zur Längsachse des Systemträgers 24. In einer horizontalen Ansicht von der Seite (Fig. 3) erstreckt sich die Längsachse 64 unter einem Winkel γ von ca. 9° zur Laufrichtung des Fördergurts 12. Weiter ist die Längsachse 64 in der gezeigten Ausführung rechtwinklig, d.h. unter einem Winkel δ von 90° ausgerichtet zur Anlagekante des Abstreifelements 42 (s. Fig. 4).

Der Schaft 58 ist innerhalb der Hülse 60 um die Längsachse 64 frei drehbar, weshalb die Längsachse 64 auch als Drehachse bezeichnet wird. Dabei ist allerdings ein Dichtungsring 66 vorgesehen, der einerseits eine Abdichtung des Innenraums der Hülse 60 gegenüber dem Schaft 58 bewirkt und andererseits durch Reibung aufgrund der Anlage an der Innenseite der Hülse 60 eine gewisse Schwergängigkeit der Bewegung des Schafts 58 gegenüber der Hülse 60 herstellt.

Die Drehverriegelung 62 umfasst auf Seiten der Hülse 60 ein im Inneren angeordnetes längliches Fenster 62a mit einer Berandung, die in das Innere der Hülse 60 hervorsteht und auf Seiten des Schaftes 58 ein längliches, plattenförmiges Eingriffselement 62b, das am Ende des Schaftes 58 an einer Verlängerung 63 mit kleinerem Durchmesser fest angebracht ist.

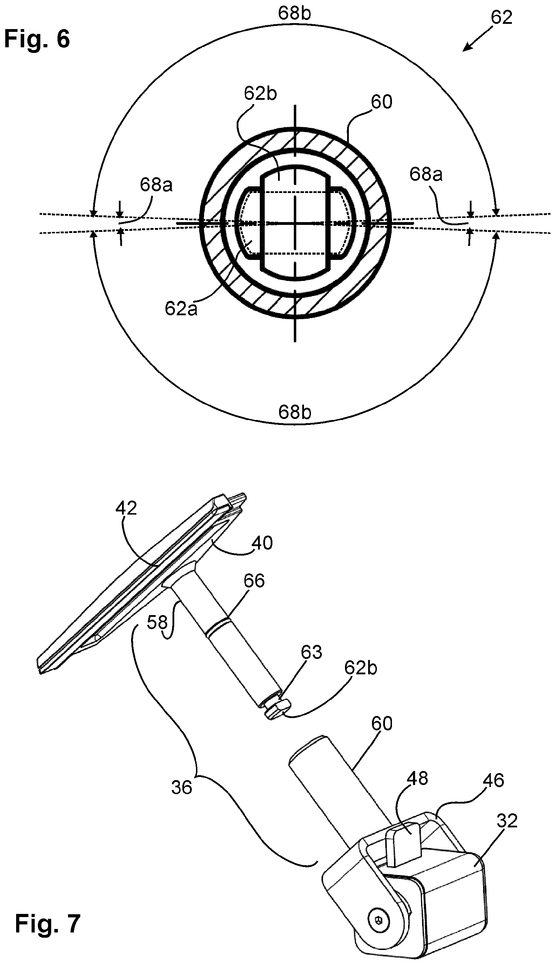

Wie insbesondere aus der Querschnittsansicht in Fig. 6 ersichtlich ist, sind das Eingriffselement 62b und das Fenster 62a so geformt, dass das Eingriffselement 62b bei paralleler Ausrichtung zum Fenster 62a (gestrichelte Darstellung) durch dieses in Richtung der Längsachse 64 hindurch gesteckt werden kann, während es in einer gegenüber der parallelen Ausrichtung verdrehten Lage wie gezeigt (durchgezogene Linie) an der Berandung des Fensters 62a verriegelt ist.

Folglich ergibt sich hinsichtlich der Festlegung des Schaftes 58 an der Hülse 60 in axialer Richtung der Längsachse 64 eine Abhängigkeit von der Drehstellung:
Bei einer Stellung des Eingriffselement 62b parallel zum Fenster 62a (gestrichelte Darstellung) befindet sich der Schaft 58 mit dem daran angebrachten Abstreiferelementhalter 40 und Abstreiferelement 42 in einer Stellung innerhalb eines Freigabewinkelbereiches 68a. Bei einer Drehstellung im Freigabewinkelbereich ist die Drehverriegelung 62 gelöst und der Schaft 58 kann in Längsrichtung gegenüber der Hülse 60 frei verschoben werden.

Bei weiterer Verdrehung des Schaftes 58 gegenüber der Hülse 60 greifen die Enden des Eingriffselements 62b hinter die Umrandung des Fensters 62a, so dass der Schaft 58 in Längsrichtung gegenüber der Hülse 60 festgelegt ist. Die entsprechenden Drehstellungen des Schaftes 58 liegen innerhalb eines Festwinkelbereichs 68b, in dem die Drehverriegelung 62 verriegelt ist.

Wie dargestellt ist der Freigabewinkelbereich 68a dabei zentriert um die in Fig. 6 gestrichelt gezeigte Drehstellung, in der sich die zur Anlage an den Fördergurt 12 vorgesehene vordere Kante des Abstreiferelements 42 unter 90° zur Längsrichtung des Systemträgers 24 sowie zur Schwenkachse 38 des Abstreifermoduls 26 befindet. Der Festwinkelbereich 68b hingegen ist zentriert um eine Drehstellung, die hiergegen um 90° gedreht und in Fig. 6 mit durchgezogenen Linien gezeigt ist. In dieser Drehstellung ist die Abstreifkante des Abstreiferelements 42 parallel zur Längsrichtung des Systemträgers 24 sowie zur Schwenkachse 38 des Gelenks 44 ausgerichtet.

Durch die freie Drehbarkeit des Schaftes 58 innerhalb der Hülse 60 kann sich das jeweilige Abstreiferelement 42 bei Anlage an den Fördergurt 12 nach dessen Kontur ausrichten. Dieser wird in der Praxis nicht über die gesamte Gurtbreite stets plan sein, sondern sich z.B. zu den Rändern hin wölben. Durch den Andruck stellen sich die Abstreiferelementhalter 40 stets so, dass die Abstreiferelemente 42 der Form des Fördergurts 12 folgen.

Dabei wird allerdings in keiner Betriebssituation eine Drehposition erreicht, die innerhalb des Freigabewinkelbereiches 68a liegt. So bleibt die Drehverriegelung 62 während der Anlage des Abstreiferelements 42 am Fördergurt 12 stets im Festwinkelbereich und gewährleistet somit die Befestigung am Basiselement 32 der jeweiligen Abstreifermodule 26.

Um Arbeiten am Abstreifer 18 und den Abstreifermodulen 26 zu ermöglichen, insbesondere den Wechsel der Einheit aus Abstreiferelement 42, Abstreiferelementhalter 40 und Schaft 26 zu ermöglichen, kann wie nachfolgend im Hinblick auf Fig. 8a bis 8e erläutert wird der Systemträger 42 mit den daran angebrachten Abstreifermodulen 26 auf besonders einfache Weise gelöst und zur Seite hin entnommen werden.

Hierfür ist auf Seiten der Halterung 20 eine besondere Anbringung der Halteplatte 30 an der Anbringungsplatte 28 vorgesehen und auf Seiten der Gegenhalterung 22 eine Lagerung des Systemträgers 24 in der Lagerbuchse 33 der Halteplatte 30 so, dass dieser in seiner Längsrichtung frei beweglich ist.

Wie in Fig. 1a dargestellt, ist die Halteplatte 30 an der Anbringungsplatte 28 der Halterung 20 festgelegt durch zwei Steckverbindungen 70 und eine Schraubverbindung 72. Die Steckverbindungen 70 sind gebildet durch zwei im Abstand voneinander parallel angeordnete Bolzen an der Anbringungsplatte 28, die passgenau in Bohrungen der Halteplatte 30 aufgenommen sind. Die Steckverbindungen 70 sindlösbar durch Abziehen der Halteplatte 30 von der Anbringungsplatte 28 in Längsrichtung des Systemträgers 24.

Die zwischen den Steckverbindungen 70 gebildete Schraubverbindung 72 umfasst eine parallel zu den Bolzen ausgerichtete Schraube, mit der die Halteplatte 30 an die Anbringungsplatte 28 geschraubt ist.

In einer Betriebsanordnung zum Betrieb des Gurtbandförderers 10 und des Abstreifers 18, wird die Halteplatte 30 mittels der Schraubverbindung 72 an der Anbringungsplatte 28 festgelegt.

Bei Unterbrechung des Betriebs können zu wartende Teile des Abstreifers 18 durch Überführen des Abstreifers 18 in eine Montageanordnung entnommen werden. Durch Lösen der Schraubverbindung 72 kann die Halteplatte 30 von der Anbringungsplatte 28 gelöst werden, indem nachfolgend durch Zug in Richtung der Längsachse des Systemträgers 24 auch die Steckverbindungen 70a, 70b gelöst werden. Hierfür ist ein Griff 74 vorgesehen.

Fig. 8a zeigt ausgehend von der Betriebsanordnung zunächst das Lösen der Schraubverbindung 72. Nachfolgend wird die Halteplatte 30 zusammen mit dem Systemträger 24 in dessen Längsrichtung von der Anbringungsplatte 28 abgezogen, wobei sich die Steckverbindungen 70a, 70b lösen.

Wie bereits erwähnt umfasst die Halterung 20 zwischen der Anbringungsplatte 28 und der Halteplatte 30 das Stützelement 80. Das Stützelements 80 weist wie aus Fig. 8b ersichtlich einen sich in Richtung des Systemträgers 24 erstreckenden und diesen teilweise umgreifenden hakenförmigen Halteabschnitt 82 auf, der eine Vertiefung 86 ausbildet. Der Halteabschnitt 82 und die Vertiefung 86 haben wie gezeigt eine der (in diesem Fall runden) Außenkontur des Systemträgers 24 entsprechende, (in diesem Fall runde) abschnittsweise Innenkontur. Der Halteabschnitt 82 ist in der Betriebsanordnung, d. h. wenn die Halteplatte 30 an der Anbringungsplatte 28 befestigt ist, so angeordnet, dass er den Systemträger 24 nicht berührt, sondern in einem gewissen Abstand von wenigen Millimetern hiervon verbleibt. Oberhalb des Halteabschnitts 82 weist das Stützelement 80 einen Ausschnitt 84 auf, durch den der Systemträger 24 verläuft.

In der Montageanordnung, d.h. nach dem Lösen der Schraubverbindung 72 sowie der Steckverbindungen 70a, 70b (Fig. 8b) sinkt der Systemträger 24 geringfügig ab und liegt danach auf dem Halteabschnitt 82 des Stützelements 80 in der Vertiefung 86 auf. Nach Lösen der Verbindung zwischen der Halteplatte 30 und der Anbringungsplatte 28 übernimmt somit das Stützelement 80 das Halten des Systemträgers 24. Wie dargestellt ist das Stützelement 80 an der Anbringungsplatte 28 und somit am Bandgerüst 16 befestigt. Wie in Fig. 10 dargestellt umfasst der Halteabschnitt 82 an der Vertiefung 86 den Systemträger 24 über einen Umfangsbereich α von ca. 135° und unterstützt dabei den Systemträger 24 von unten so, dass dieser nicht herabfällt.

Im weiteren Verlauf wird nun der Systemträger 24 in Richtung seiner Längsachse zusammen mit der Halteplatte 30 und der Spannvorrichtung 50 herausgezogen (Fig. 8b). Dabei unterstützt das Stützelement 82 den Systemträger 24, so dass dieser nicht herunterfällt. Durch die Verschiebbarkeit des Systemträgers 24 in der Lagerbuchse 33 der Gegenhalterung 22 ist ein besonders leichtes Herausziehen ermöglicht.

Dabei können die Abstreifermodule 26 die Anbringungsplatte 28 und das Stützelement 80 passieren, da die hakenförmige, den Systemträger 24 nur teilweise umgreifende Form des Halteabschnitts 82 mit dem Ausschnitt 84 ausreichend Freiraum lässt, so dass beim Herausziehen des Systemträgers 24 die Abstreifermodule 26 in eine Auszugstellung außerhalb des Gurtbereichs überführt werden können (Fig. 8d). Die Abstreifermodule 26 können so durch einen freien Bereich in der Ebene des Stützelements 80 sowie der Anbringungsplatte 28 hindurchgeführt werden, ohne anzuschlagen. Teil des freien Bereiches bildet dabei der Ausschnitt 84 des Stützelements 80.

In der Auszugstellung sind die Abstreifermodule 26 gut zugänglich und können inspiziert sowie gewartet werden. Insbesondere können verschlissene Abstreiferelemente 42 ersetzt werden, indem die jeweiligen Einheiten aus Abstreiferelement 42, Abstreiferelementhalter 40 und Schaft 58 des jeweiligen Abstreifermoduls wie oben beschrieben durch Verdrehung um die Drehachse 64 gelöst und durch Abziehen in Längsrichtung getrennt werden sowie nachfolgend neue Elemente in gleicher Weise angebracht werden.

Inspektion und Wartung des Abstreifers 18 ist somit besonders erleichtert. In der gezeigten Ausführungsform kann durch Lösen einer einzigen Schraube (Schraubverbindung 72) ermöglicht werden, den Systemträger 24 mitsamt der Abstreifermodule 26 seitlich herauszuziehen. Durch die Unterstützung mittels des Stützelements 80 kann dies durch eine einzelne Person durchgeführt werden.

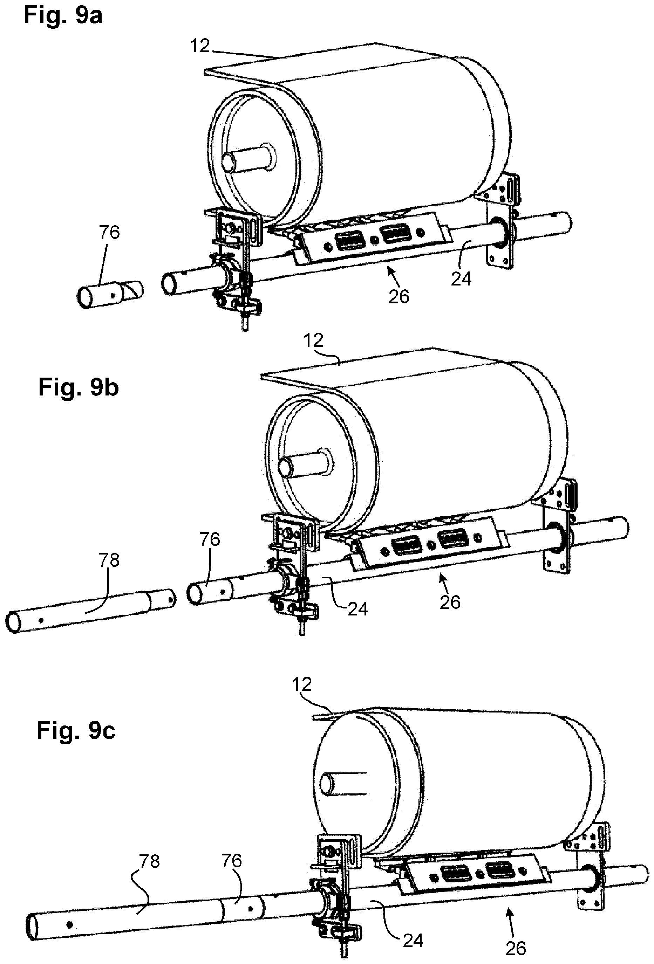

Steht seitlich des Fördergurts 12 ausreichend Platz zur Verfügung, kann die Handhabung des Systemträgers 24 beim Herausziehen noch weiter erleichtert werden, indem eine Ausziehhilfe verwendet wird. Hierzu kann, wie in Fig. 9a gezeigt, zunächst ein Adapter 76 seitlich auf den Systemträger 24 aufgesteckt und an diesem verklemmt bzw. anderweitig festgelegt werden. An den Adapter 76 kann anschließend ein Rohr angebracht werden, das als Ausziehhilfe 78 dient und in Verlängerung des Systemträgers 24 angebracht wird. Mittels der Ausziehhilfe 78 kann der Systemträger 24 besonders gut gehandhabt werden, insbesondere in Verbindung mit der Auflage am Halteabschnitt 82 des Stützelements 80.

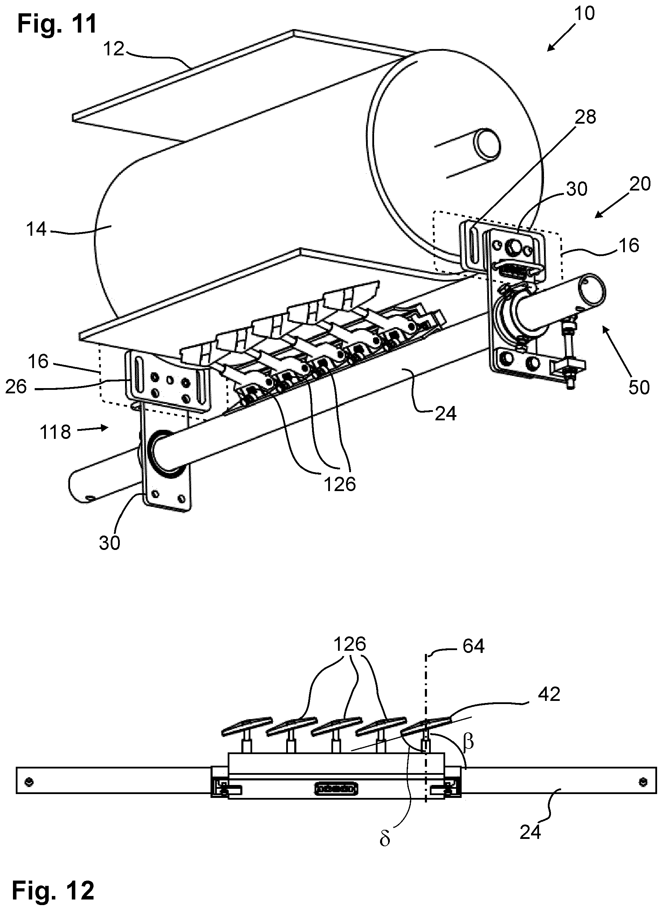

In Fig. 11 - 14 ist ein Abstreifer 118 gemäß einer zweiten Ausführungsform gezeigt. Der Abstreifer 118 gemäß der zweiten Ausführungsform stimmt in zahlreichen Details mit dem Abstreifer 18 gemäß der ersten Ausführungsform überein, so dass nachfolgend nur die Unterschiede näher erläutert werden und im Übrigen auf die vorstehende Beschreibung verwiesen wird. Gleiche Bezugszeichen bezeichnen zwischen den Ausführungsformen übereinstimmende Elemente.

Während beim Abstreifer 18 gemäß der ersten Ausführungsform wie beschrieben und dargestellt die Abstreifelemente 42 zweireihig angeordnet sind, umfasst der Abstreifer 118 gemäß der zweiten Ausführungsform eine einreihige Anordnung von Abstreifelementen 42 an jeweils gleich langen Abstreifermodulen 126, die nebeneinander auf dem Systemträger 24 angeordnet sind.

Wie besonders aus Fig. 12 ersichtlich ist, sind die Abstreifkanten der Abstreiferelemente 42 nicht wie bei der ersten Ausführungsform in Querrichtung des Fördergurts 12 ausgerichtet, sondern schräg dazu unter einem Winkel, der im dargestellten Beispiel ca. 15° beträgt. Die Abstreiferarme 36 erstrecken sich mit ihrer Längsachse 64 aber wie bei der ersten Ausführungsform in Längsrichtung des Fördergurts 12, d.h. wie bei der ersten Ausführungsform unter einem Winkel von β von 90°.

An den Abstreiferarmen 36 sind die Abstreiferelemente 42 schräg unter einem Winkel δ von ca. 75° angebracht. Dabei sind benachbarte Abstreifermodule 126 auf dem Systemträger 24 so eng angeordnet, dass sich - in Längsrichtung des Fördergurts 12 gesehen - eine geringe Überlappung der Abstreiferelemente 42 und so über die gesamte Gurtbreite eine Abstreifwirkung ergibt.

Im Übrigen stimmt der Abstreifer 118 gemäß der zweiten Ausführungsform in Aufbau und Funktion mit dem Abstreifer 18 gemäß der ersten Ausführungsform überein, d.h. ebenso wie beim Abstreifer 18 umfasst jeder Abstreifer 118 das Basiselement 32, das am Systemträger 24 in der Klemmhalterung 34 lösbar angebracht ist sowie den Abstreiferarm 36, der um eine Schwenkachse 38 schwenkbar angebracht ist und an dessen Ende jeweils ein Abstreifelementhalter 40 mit einem Abstreifelement 42 angeordnet ist. Die vorgespannte Torsionsfeder prägt ein Drehmoment auf, so dass im Betrieb des Abstreifers 118 die Abstreifkanten der Abstreiferelemente 42 schälend auf der Oberfläche des Fördergurts 12 anliegen und federnd gegen dessen Oberfläche 12 angedrückt werden um Verschmutzungen abzustreifen. Bei stationären Hindernissen auf der Oberfläche des Fördergurts 12 können die Abstreifelemente 42 durch eine Schwenkbewegung des Abstreiferarms 36 um die Schwenkachse 38 gegen die Wirkung der Feder ausweichen.

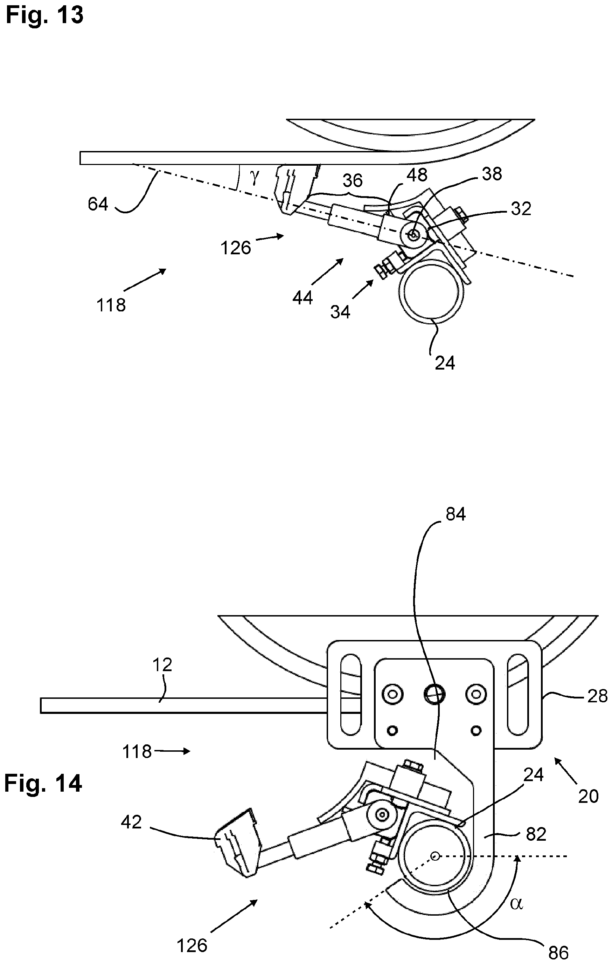

Fig. 13 zeigt für die zweite Ausführungsform eine horizontale Ansicht von der Seite, in der der Winkel γ zwischen der Laufrichtung des Fördergurts 12 und der Längsachse 64 zu entnehmen ist. Der Winkel γ kann je nach Anordnung und Einstellung bspw. zwischen 0° und 20° betragen; in der gezeigten Ausführung beträgt der Winkel γ ca. 15°.

Auch bei der zweiten Ausführungsform umfasst der Abstreiferarm 36 den am Abstreiferelementhalter 40 angebrachten Schaft 58, der in der Hülse 60 eingesteckt und um die Längsachse 64 darin drehbar ist. Mittels der Drehverriegelung 62 ist sichergestellt, dass der Schaft 58 nur bei entsprechender Ausrichtung, d.h. Drehung aus der durch die Gurtanlage definierten Normalposition aus der Hülse 60 herausgezogen bzw. in diese eingesteckt werden kann.

## Patentansprüche

1. Abstreifersystem (18) für einen Fördergurt (12), mit
- einem Systemträger (24),
- mindestens einem am Systemträger angebrachten Abstreifermodul (26, 126) mit einem Abstreiferelement (42) zur Anlage an den Fördergurt (12),
- einer Halterung (20) für den Systemträger (24) mit mindestens einem Anbringungsteil (28) zur ortsfesten Anbringung relativ zu einem Bandgerüst (16) des Fördergurts (12), einem Halteelement (30) zur Anbringung des Systemträgers (24) am Anbringungsteil (28) und einem Stützelement (80) am Anbringungsteil (28),
- wobei das Halteelement (30) mit dem Systemträger (24) über eine Spannanordnung (50) gekoppelt ist, mittels der der Systemträger (24) mit einem Drehmoment um seine Längsachse beaufschlagbar ist,
- und wobei das Halteelement (30) lösbar mit dem Anbringungsteil (28) verbunden ist, so dass
- in einer Betriebsanordnung, in der das Halteelement (30) mit dem Anbringungsteil (28) verbunden ist, der Systemträger (24) über das Halteelement (30) an dem Anbringungsteil (28) gehalten ist,
- und in einer Montageanordnung, in der das Halteelement (30) von dem Anbringungsteil (28) gelöst ist, der Systemträger (24) mit dem Abstreifermodul (26, 126) und dem Halteelement (30) in Längsrichtung des Systemträgers (24) in einer Auszugsstellung so ausziehbar ist, dass beim Ausziehen des Systemträgers (24) das Abstreifermodul (26, 126) das Anbringungsteil (28) passiert,
- wobei in der Auszugsstellung das Stützelement (80) den Systemträger (24) stützt.

2. Abstreifersystem (18) nach Anspruch 1, bei dem
- das Halteelement (30) am Anbringungsteil (28) mittels einer Schraubverbindung (72) sowie mindestens einer Steckverbindung (70) verbunden ist,
- wobei die Steckverbindung (70) in Richtung der Längsachse des Systemträgers (24) ausgerichtet ist, so dass das Halteelement (30) nach dem Lösen der Schraubverbindung (72) in der Längsrichtung vom Anbringungsteil (28) abziehbar ist.

3. Abstreifersystem (18) nach einem der vorangehenden Ansprüche, bei dem
- das Stützelement (80) den Systemträger (24) über einen ersten Teil von dessen Umfang ergreift,
- wobei das Stützelement (80) einen zweiten Teil des Umfangs des Systemträgers (24) freilässt, so dass das Abstreifermodul (26, 126) beim Verschieben des Systemträgers (24) das Stützelement (80) passieren kann.

4. Abstreifersystem (18) nach einem der vorangehenden Ansprüche, bei dem
- das Anbringungsteil (28) oberhalb des Systemträgers (24) angeordnet ist,
- und das Stützelement (80) den Systemträger (24) mindestens so weit umgreift, dass der Systemträger (24) zwischen dem Anbringungsteil (28) und einem Abschnitt des Stützelements (80) angeordnet ist.

5. Abstreifersystem (18) nach einem der vorangehenden Ansprüche, bei dem
- zwischen Halteelement (30) und Systemträger (24) eine Drehlagerung vorgesehen ist.

6. Abstreifersystem (18) nach einem der vorangehenden Ansprüche, bei dem
- das Halteelement (30) mindestens zum Teil plattenförmig ausgebildet ist,
- und der Systemträger (24) das Halteelement durchdringt.

7. Abstreifersystem (18) nach einem der vorangehenden Ansprüche, bei dem
- das Anbringungsteil (28) ein erstes Anbringungsteil ist,
- und eine Gegenhalterung (22) mit einem zweiten Anbringungsteil (28) vorgesehen ist, das in einem Abstand in Längsrichtung des Systemträgers (24) vom ersten Anbringungsteil (28) angeordnet ist,
- wobei der Systemträger (24) gegenüber dem zweiten Anbringungsteil (28) in seiner Längsrichtung verschiebbar gelagert ist.

8. Abstreifersystem (18) nach einem der vorangehenden Ansprüche, bei dem
- eine Ausziehhilfe (78) so an dem Systemträger (24) anbringbar ist, dass sie sich in dessen Verlängerung in der Längsrichtung des Systemträgers (24) erstreckt.

9. Abstreifersystem (18) nach einem der vorangehenden Ansprüche, bei dem
- das Abstreifermodul (26, 126) einen Abstreiferarm (36) aufweist, an dem das Abstreiferelement (42) angebracht ist,
- wobei der Abstreiferarm (36) in einem Modulgelenk (44) schwenkbar ist um eine Schwenkachse (38), die mindestens im Wesentlichen parallel zur Längsrichtung des Systemträgers (24) ausgerichtet ist.

10. Abstreifersystem(18) nach Anspruch 9, bei dem
- das Abstreifermodul (26, 126) ein Federelement aufweist, um den Abstreiferarm (36) mit einem Drehmoment zu beaufschlagen.

11. Abstreifersystem (18) nach einem der vorangehenden Ansprüche, bei dem
- das Abstreifermodul (26, 126) am Systemträger (24) in einer Klemmhalterung (34) angebracht ist.

12. Gurtbandförderer (10), mit
- einem Bandgerüst (16) und einem umlaufend daran angebrachten Fördergurt (12),
- einem Abstreifersystem (18) nach einem der vorangehenden Ansprüche,
- wobei der Systemträger (24) quer zum Fördergurt (12) angeordnet ist,
- das Abstreiferelement (42) am Fördergurt (12) anliegt,
- und wobei das Anbringungsteil (28) am Bandgerüst (16) befestigt oder ein Teil des Bandgerüsts (16) ist.

13. Verfahren zur Durchführung von Montage-, Prüfungs- oder Wartungsarbeiten an einem Abstreifersystem (18) gemäß einem der Ansprüche 1 bis 11 oder einem Gurtbandförderer (10) gemäß Anspruch 12, bei dem
- ausgehend von der Betriebsanordnung das Halteelement (30) vom Anbringungsteil (28) gelöst wird,
- und der Systemträger (24) mit dem Abstreifermodul (26, 126) und dem Halteelement (30) in Längsrichtung des Systemträgers (24) ausgezogen wird,
- wobei das Stützelement (80) während des Ausziehens des Systemträgers diesen stützt.

14. Verfahren nach Anspruch 13, bei dem
- in der Betriebsanordnung das Halteelement (30) am Anbringungsteil (28) mittels einer Schraubverbindung (72) sowie mindestens einer Steckverbindung (70) verbunden ist, wobei die Steckverbindung (70) in Richtung der Längsachse des Systemträgers (24) ausgerichtet ist,
- und das Halteelement (30) vom Anbringungsteil (28) gelöst wird durch Lösen der Schraubverbindung (72),
- und die Steckverbindung gelöst wird durch Abziehen des Halteelements (30) vom Anbringungsteil (28) in der Längsrichtung.

## Claims

1. A scraper system (18) for a conveyor belt (12), having
- a system carrier (24),
- at least one scraper module (26, 126), attached to the system carrier, having a scraper element (42) for abutting against the conveyor belt (12),
- a holding device (20) for the system carrier (24) having at least one attachment part (28) for stationary attachment relative to a belt scaffold (16) of the conveyor belt (12), a holding element (30) for attaching the system carrier (24) to the attachment part (28) and a supporting element (80) on the attachment part (28),
- wherein the holding element (30) is coupled to the system carrier (24) via a tensioning arrangement (50), by means of which the system carrier (24) can be acted upon with a torque about its longitudinal axis,
- and wherein the holding element (30) is detachably connected to the attachment part (28), such that
- in an operative position, in which the holding element (30) is connected to the attachment part (28), the system carrier (24) is held on the attachment part (28) via the holding element (30),
- and in a assembly arrangement, in which the holding element (30) is detached from the attachment part (28), the system carrier (24), having the scraper module (26, 126) and the holding element (30), can be extracted in the longitudinal direction of the system carrier (24) in an extracted position such that when the system carrier (24) is extracted, the scraper module (26, 126) passes the attachment part (28),
- wherein, in the extracted position, the supporting element (80) supports the system carrier (24).

2. The scraper system (18) according to Claim 1, in which
- the holding element (30) is connected to the attachment part (28) by means of a screw connection (72) as well as at least one plug connection (70),
- wherein the plug connection (70) is aligned in the direction of the longitudinal axis of the system carrier (24), such that the holding element (30) can be pulled off from the attachment part (28) following the releasing of the screw connection (72) in the longitudinal direction.

3. The scraper system (18) according to one of the preceding claims, in which
- the supporting element (80) grips the system carrier (24) via a first part of the circumference thereof,
- wherein the supporting element (80) leaves free a second part of the circumference of the system carrier (24) such that, when the system carrier (24) is displaced, the scraper module (26, 126) can pass the supporting element (80).

4. The scraper system (18) according to one of the preceding claims, in which
- the attachment part (28) is arranged above the system carrier (24),
- and the supporting element (80) encompasses the system carrier (24) at least so far that the system carrier (24) is arranged between the attachment part (28) and a section of the supporting element (80).

5. The scraper system (18) according to one of the preceding claims, in which
- a rotary bearing is provided between the holding element (30) and system carrier (24).

6. The scraper system (18) according to one of the preceding claims, in which
- the holding element (30) has at least in part a plate-shaped configuration,
- and the system carrier (24) penetrates the holding element.

7. The scraper system (18) according to one of the preceding claims, in which
- the attachment part (28) is a first attachment part,
- and a counter support (22) is provided with a second attachment part (28) which is arranged at a distance from the first attachment part (28) in the longitudinal direction of the system carrier (24),
- wherein the system carrier (24) is displaceably mounted with respect to the second attachment part (28) in its longitudinal direction.

8. The scraper system (18) according to one of the preceding claims, in which
- an extraction aid (78) can be attached to the system carrier (24) such that it extends in the extension thereof in the longitudinal direction of the system carrier (24).

9. The scraper system (18) according to one of the preceding claims, in which
- the scraper module (26, 126) has a scraper arm (36) to which the scraper element (42) is attached,
- wherein the scraper arm (36) can be pivoted in a module joint (44) about a pivot axis (38), which is aligned at least substantially parallel to the longitudinal direction of the system carrier (24).

10. The scraper system (18) according to Claim 9, in which
- the scraper module (26, 126) has a spring element in order to act on the scraper arm (36) with a torque.

11. The scraper system (18) according to one of the preceding claims, in which
- the scraper module (26, 126) is attached to the system carrier (24) in a clamping holding device (34).

12. A belt conveyor (10), having
- a belt scaffold (16) and a conveyor belt (12) attached thereto in a circulating manner,
- a scraper system (18) according to one of the preceding claims,
- wherein the system carrier (24) is arranged transversely to the conveyor belt (12),
- the scraper element (42) abuts against the conveyor belt (12),
- and wherein the attachment part (28) is fastened to the belt scaffold (16) or is part of the belt scaffold (16).

13. A method for performing mounting, testing or maintenance work on a scraper system (18) according to one of Claims 1 to 11 or a belt conveyor according to Claim 12, in which,
- starting from the operative position, the holding element (30) is detached from the attachment part (28),
- and the system carrier (24) having the scraper module (26, 126) and the holding element (30) is extracted in the longitudinal direction of the system carrier (24),
- wherein, during the extraction of the system carrier, the supporting element (80) supports the latter.

14. The method according to Claim 13, in which,
- in the operative position, the holding element (30) is connected to the attachment part (28) by means of a screw connection (72) as well as at least one plug connection (70), wherein the plug connection (70) is aligned in the direction of the longitudinal axis of the system carrier (24),
- and the holding element (30) is detached from the attachment part (28) by releasing the screw connection (72),
- and the plug connection is detached by pulling off the holding element (30) from the attachment part (28) in the longitudinal direction.

## Revendications

1. Système de raclage (18) pour une bande transporteuse (12), comportant
- un support de système (24),
- au moins un module racleur (26, 126), fixé au porte-système, comportant un élément racleur (42) destiné à venir en butée contre la bande transporteuse (12),
- un dispositif de maintien (20) pour le support de système (24) comportant au moins une partie de fixation (28) pour une fixation stationnaire par rapport à un échafaudage (16) de la bande transporteuse (12), un élément de maintien (30) pour fixer le support de système (24) à la partie de fixation (28) et un élément de support (80) sur la partie de fixation (28),
- dans lequel l'élément de maintien (30) est couplé au support de système (24) par l'intermédiaire d'un dispositif de tension (50), au moyen duquel le support de système (24) peut être soumis à un couple autour de son axe longitudinal,
- et dans lequel l'élément de maintien (30) est relié de manière amovible à la pièce de fixation (28), de sorte que
- dans une position opérationnelle, dans laquelle l'élément de maintien (30) est relié à la partie de fixation (28), le support de système (24) est maintenu sur la partie de fixation (28) par l'intermédiaire de l'élément de maintien (30),
- et dans une disposition d'assemblage, dans laquelle l'élément de maintien (30) est détaché de la pièce de fixation (28), le support de système (24) avec le module de raclage (26, 126) et l'élément de maintien (30) peut être extrait dans la direction longitudinale du support de système (24) dans une position d'extraction telle que, lorsque le support de système (24) est extrait, le module de raclage (26, 126) passe la pièce de fixation (28),
- dans lequel, en position extraite, l'élément de support (80) soutient le support de système (24).

2. Système de raclage (18) selon la revendication 1, dans lequel
- l'élément de maintien (30) est relié à la pièce de fixation (28) au moyen d'un raccord à vis (72) et d'au moins un raccord à fiche (70),
- dans lequel le raccord à fiche (70) est aligné dans la direction de l'axe longitudinal du support de système (24), de sorte que l'élément de maintien (30) peut être retiré de la partie de fixation (28) après le déblocage du raccord à vis (72) dans la direction longitudinale.

3. Système de raclage (18) selon l'une des revendications précédentes, dans lequel
- l'élément de support (80) saisit le support de système (24) sur une première partie de sa circonférence,
- dans lequel l'élément de support (80) laisse libre une deuxième partie de la circonférence du support de système (24) de sorte que, lorsque le support de système (24) est déplacé, le module de raclage (26, 126) peut passer l'élément de support (80).

4. Système de raclage (18) selon l'une des revendications précédentes, dans lequel
- la pièce de fixation (28) est disposée au-dessus du support de système (24),
- et l'élément de support (80) englobe le support de système (24) au moins jusqu'à ce que le support de système (24) soit disposé entre la partie de fixation (28) et une section de l'élément de support (80).

5. Système de raclage (18) selon l'une des revendications précédentes, dans lequel
- un palier rotatif est prévu entre l'élément de maintien (30) et le support de système (24).

6. Système de raclage (18) selon l'une des revendications précédentes, dans lequel
- l'élément de maintien (30) a au moins en partie une configuration en forme de plaque,
- et le porte-système (24) pénètre dans l'élément de maintien.

7. Système de raclage (18) selon l'une des revendications précédentes, dans lequel
- la pièce de fixation (28) est une première pièce de fixation,
- et un contre-support (22) est pourvu d'une deuxième partie de fixation (28) qui est disposée à une certaine distance de la première partie de fixation (28) dans la direction longitudinale du porte-système (24),
- dans lequel le porte-système (24) est monté de manière déplaçable par rapport à la deuxième partie de fixation (28) dans sa direction longitudinale.

8. Système de raclage (18) selon l'une des revendications précédentes, dans lequel
- une aide à l'extraction (78) peut être fixée au porte-système (24) de telle sorte qu'elle s'étende dans son prolongement dans la direction longitudinale du porte-système (24).

9. Système de raclage (18) selon l'une des revendications précédentes, dans lequel
- le module de raclage (26, 126) comporte un bras de raclage (36) auquel l'élément de raclage (42) est fixé,
- le bras racleur (36) peut pivoter dans une articulation modulaire (44) autour d'un axe de pivotement (38), qui est aligné au moins sensiblement parallèlement à la direction longitudinale du porte-système (24).

10. Système de raclage (18) selon la revendication 9, dans lequel
- le module de raclage (26, 126) est doté d'un élément de ressort afin d'exercer un couple sur le bras de raclage (36) .

11. Système de raclage (18) selon l'une des revendications précédentes, dans lequel
- le module de raclage (26, 126) est fixé au support de système (24) dans un dispositif de serrage (34).

12. Convoyeur à bande (10), comportant
- une structure de bande (16) et une bande transporteuse (12) montée sur celle-ci de manière circulante,
- un système de raclage (18) selon l'une des revendications précédentes,
- dans lequel le support de système (24) est disposé transversalement à la bande transporteuse (12),
- l'élément racleur (42) vient en butée contre la bande transporteuse (12),
- et dans lequel la pièce de fixation (28) est fixée à l'échafaudage de ceinture (16) ou fait partie de la structure de bande (16).

13. Procédé pour effectuer des travaux de montage, d'essai ou d'entretien sur un système racleur (18) selon l'une des revendications 1 à 11 ou sur un convoyeur à bande selon la revendication 12, dans lequel,
- à partir de la position opérationnelle, l'élément de maintien (30) est détaché de la pièce de fixation (28),
- et le support de système (24) comportant le module de raclage (26, 126) et l'élément de maintien (30) est extrait dans la direction longitudinale du support de système (24),
- dans lequel, pendant l'extraction du porte-système, l'élément de support (80) soutient ce dernier.

14. Méthode selon la revendication 13, dans laquelle,
- en position de fonctionnement, l'élément de maintien (30) est relié à la pièce de fixation (28) au moyen d'un raccord à vis (72) et d'au moins un raccord à fiche (70), le raccord à fiche (70) étant orienté dans le sens de l'axe longitudinal du porte-système (24),
- et l'élément de maintien (30) est détaché de la pièce de fixation (28) en libérant le raccord à vis (72),
- et le raccord à fiche est détaché en retirant l'élément de maintien (30) de la partie de fixation (28) dans la direction longitudinale.
